# EUROPÄISCHE PATENTSCHRIFT

(11) **EP 0 463 207 B1**
(45) Veröffentlichungstag und Bekanntmachung des Hinweises auf die Patenterteilung: **08.03.1995**
(21) Anmeldenummer: 90112139.2
(22) Anmeldetag: 26.06.1990
(51) Int. Cl.: H04Q 3/545

(54) **Programmgesteuerte Kommunikationsanlage**
Program-controlled communications system
Système de communication avec commande programmée

(43) Veröffentlichungstag der Anmeldung: 02.01.1992
(73) Patentinhaber: SIEMENS AKTIENGESELLSCHAFT, 80333 München (DE)
(72) Erfinder: Weber, Dietmar, Dipl.-Math., D-8000 München 70 (DE); Hubig, Wolfgang, Dr., D-8000 München 71 (DE)

(56) Entgegenhaltungen:
- EP-A- 0 303 870
- EP-A- 0 333 123
- NACHRICHTEN TECHNIK ELEKTRONIK, Bd. 35, Nr. 2, 1985, Berlin,DD;Seiten 45 - 47;H.KIESER: "Software für eine digitale Vermittlungsanlage mit modularem Aufbau."
- THE BELL SYSTEM TECHNICAL JOURNAL,Januar 1983, New York, US;Seiten 303 - 322;M.E.GRZELAKOWSKI et al.: "DMERT Operating systems"
- BRITISH TELECOMMUNICATIONS ENGINEERING, Bd. 3, Nr. 4, Januar 1985, London,GB;Seiten 226-240; D.J.THROUGHTON et al.: "System X: The Processor Utility"

## Beschreibung

Die Erfindung betrifft eine programmgesteuerte Kommunikationsanlage bzw. Vermittlungseinrichtung nach dem Oberbegriff des Patentanspruchs 1.

Solche programmgesteuerten Kommunikationsanlagen dienen in Kommunikationssystemen zur Verbindung von Endgeräten untereinander und zur Verbindung dieser Endgeräte mit Kommunikationsnetzen, insbesondere öffentlichen Netzen.

Die Vielfalt bekannter Kommunikationssysteme reicht von einfachen Telefonsystemen für die ausschließliche Übertragung von Sprache bis hin zum voll ausgebauten ISDN-Kommunikationssystem (Integrated Services Digital Network) mit einer simultanen Mehrfach- oder auch Mischkommunikation von Sprache, Text, Bild und Daten.

An die Kommunikationsanlage in einem ISDN-Kommunikationssystem sind Endgeräte mit vielfältigen Leistungsmerkmalen anschließbar - von analogen und digitalen Telefonen, Fernkopierern, multifunktionalen Terminals, Arbeitsplatzsystemen, Personal Computern, Teletex- und Bildschirmtextstationen bis hin zu Datenterminals.

Durch eine Sonderausgabe von "Telcom Report" - ISDN im Büro - 1985, ISBN 3-8009-3846-4, Siemens Aktiengesellschaft, ist ein derartiges Kommunikationssystem bekannt.

Die diesen Kommunikationssystemen zugrundeliegende Kommunikationsanlage ist modular aufgebaut und stellt im wesentlichen eine digitale Rechenanlage mit einer Vielzahl von Peripherieeinheiten dar.

Zur Ausführung spezieller Dienste und Aufgaben sind im Rahmen eines sogenannten Server-Konzeptes modulare Einheiten - Server - vorgesehen, die mit eigener "Intelligenz" diese speziellen Aufgaben übernehmen.

So werden mit einem sogenannten Betriebs- und Datenserver z. B. Leistungsmerkmale für ein elektronisches Datenbuch, für Funktionen zur Datenerfassung, Datenbearbeitung und Datentransport sowie zur Durchführung von Steuerungsaufträgen angeschlossener Rechner, zur Verfügung gestellt.

Ein sogenannter Sprachinformationsserver bietet den angeschlossenen Teilnehmern des weiteren die Möglichkeit, ihren Telefonanschluß auf persönliche Sprachpostfächer umzuleiten.

Ein Text- und Faxserver bietet u. a. Leistungsmerkmale an, die eine Umsetzung von Teletex auf Telefax durchführen, wenn beim Empfänger kein telefaxfähiges Endgerät vorhanden ist.

Jeder dieser Server ist im Prinzip eine für sich eigenständige Rechenanlage, die programmtechnisch und auch hardwaremäßig mit einer ebenfalls rechnergesteuerten Durchschalteeinheit der Kommunikationsanlage verbunden ist. An die Durchschalteeinheit, die gewissermaßen das Basismodul der Kommunikationsanlage bildet, sind die Endgeräte angeschlossen.

Der programmtechnische Teil der Kommunikationsanlage, allgemein mit Software bezeichnet, ist ebenfalls aufgaben- bzw. funktionsorientiert in Betriebs-Vermittlungs- und Sicherheitsmodule gegliedert. Zu jedem dieser Module gehört in der Durchschalteeinheit sowie in den Servern jeweils eine Vielzahl von funktionsbezogenen Programmodulen, deren Abarbeitung als sogenannte Tasken (Prozesse) in einem Betriebssystem koordiniert werden.

Da in einer Kommunikationsanlage vielfach Reaktionen innerhalb einer vorgegebenen Zeit gefordert sind, wird als Betriebssystem ein sogenanntes Echtzeit-Betriebssystem verwendet, das eine hohe Reaktionsfähigkeit ermöglicht und eine prioritätsgesteuerte Abarbeitung von Programmodulen vorsieht.

Um einerseits sicherzustellen, daß eine eintreffende Information innerhalb einer vorgegebenen Zeitdauer verarbeitet wird, muß dem zur Verarbeitung dieser eintreffenden Information vorgesehenen Programmodul eine entsprechend hohe Prioritätsstufe zugewiesen sein. Andererseits sollten aber auch Programmodule mit niedrigeren Prioritätsstufen nicht allzu lange von höherpriorisierten Programmodulen in einen Wartezustand verdrängt und wenigstens innerhalb eines größeren Zeitraumes bearbeitet werden.

Aus diesen Gründen sind für die Vergabe der Prioritätsstufen bisher stets aufwendige Testphasen erforderlich. In vielen Fällen wird erst bei solchen Testphasen deutlich, daß mit den vorgesehenen Programmodulen das gewünschte zeitliche Verhalten der Kommunikationsanlage nicht zu erreichen ist, so daß der Programmcode verschiedener Programmodule noch im Nachhinein, d. h. nach Abschluß der Entwicklungsphase einer Kommunikationsanlage, geändert werden muß.

Im Artikel "DMERT Operating System" von M.E. Grzelakowski et al. aus THE BELL TECHNICAL JOURNAL, Jan. 83, US, wird ein Multitasking System mit dynamischer Prioritätszuweisung beschrieben, d.h. Programmodule verschiedener Prioritätsstufen, die auf ihre Ausführung warten, können nach entsprechend langer Wartezeit in ihrer Priorität erhöht, oder, nachdem sie eine vorgegebene Zeit aktiv waren, in ihrer Priorität erniedrigt werden.

Die Aufgabe der vorliegenden Erfindung ist es, in einer programmgesteuerten Kommunikationsanlage eine Bearbeitung von Programmodulen innerhalb einer jeweils vorgebbaren Zeitdauer sicherstellen zu können.

Gelöst wird die Aufgabe ausgehend von einer Kommunikationsanlage gemäß den Merkmalen des Oberbegriffs des Patentanspruchs 1 durch die im kennzeichnenden Teil des Patentanspruchs 1 angegebenen Merkmale.

Jedes der Programmodule dient im allgemeinen zur Realisierung einer bestimmten Funktion der Kommunikationsanlage. Dabei hängt es entscheidend von der Betrachtungsebene innerhalb der Struktur der Kommunikationsanlage ab, was als Funktion verstanden wird. In einer unteren Ebene wird eine Funktion durch genau ein Programmodul realisiert. Von einer hierarchisch höher angeordneten Betrachtungsebene aus gesehen können jedoch mehrere Programmodule - die jeweils für sich einzelne Funktionen realisieren - für die Bildung einer gewissermaßen übergeordneten Funktion, d. h. eines Funktionskomplexes, zuständig sein. Die an der Realisierung eines solchen Funktionskomplexes beteiligten Programmodule werden zu einer Gruppe zusammengefaßt, die als Programmodulfunktionsklasse bezeichnet wird.

Bei einer erfindungsgemäß ausgebildeten Kommunikationsanlage weist das Betriebssystem gewissermaßen ein Mischverhalten auf. Bezüglich der Programmodulfunktionsklassen entspricht das Verhaltes des Betriebssystems im wesentlichen dem eines time-sharing-Betriebssystems, das einem jeweiligen Prozeß den Rechnerkern generell nur für die Dauer einer sogenannten Zeitscheibe zur Verfügung stellt.

Im Hinblick auf die Verarbeitung der Programmodule innerhalb der Programmodulfunktionsklassen bleibt das prioritätsgesteuerte und in der Regel ereignisgesteuerte Verhalten eines herkömmlichen Multitasking-Betriebssystems erhalten.

Als wesentlicher Vorteil ergibt sich dabei, daß die herkömmliche Prioritätssteuerung umgangen werden kann, so daß niedrigpriorisierte Programmodule unabhängig vom Vorhandensein höherpriorisierter Programmodule wenigstens in gewissen Zeitabständen den Rechnerkern zugeteilt bekommen. Dazu werden die betreffenden niederpriorisierten Programmodule in einer Programmodulfunktionsklasse zusammengefaßt, der mit einer gewissen Wiederholrate und für eine jeweilige Zeitdauer der Rechnerkern zur herkömmlichen prioritätsgesteuerten Verarbeitung ihrer Programmodule zugeteilt wird.

Die Wiederholrate und die Zeitdauer legen den, einer jeweiligen Programmodulfunktionsklasse zugeteilten Anteil an der Rechenleistung des Rechnerkerns fest. Dieser Anteil wird in der Regel so bemessen, daß er gerade dafür ausreicht, die Bearbeitung der betreffenden Programmodule innerhalb einer vom Kommunikationssystem geforderten Zeitdauer sicherstellen zu können.

Ein weiterer wesentlicher Vorteil besteht darin, daß ein Hinzufügen von Programmodulen zur Implementierung zusätzlicher Dienste bei einer bestehenden Kommunikationsanlage ohne Neuzuordnung der Prioritätswerte sämtlicher Programmodule möglich ist. Die hinzugefügten Programmodule werden in solchen Fällen einer neu eingefügten Programmodulfunktionsklasse zugeordnet. Eine Prioritätsstufenneuzuordnung ist damit nur unter den hinzugefügten Programmodulen erforderlich.

Eine Anpassung der Kommunikationsanlage an geänderte Echtzeitanforderungen ist jederzeit durch eine Neuverteilung der Rechenleistung auf die bestehenden und unter Umständen neu gebildeten Programmodulfunktionsklassen möglich.

Vorteilhafte Ausgestaltungen der Erfindung ergeben sich aus den Unteransprüchen 2 bis 7.

Unter betriebssystemtechnischen Gesichtspunkten, insbesondere im Hinblick auf die Strukturen eines bereits vorhandenen Betriebssystems, kann es vorteilhaft sein, statt einer einzigen Prozeßliste, in der sämtliche ablaufbereiten Programmodule aller Programmodulfunktionsklassen vermerkt werden, für jede Programmmodulfunktionsklasse eine individuelle Prozeßliste vorzusehen, in der nur die der betreffenden Programmodulfunktionsklasse zugeordneten Programmodule vermerkt werden. Als Prozeßliste in herkömmlichem Sinne gilt dann die der jeweils aktuellen Programmmodulfunktionsklasse zugehörige individuelle Prozeßliste.

Für die Fälle, in denen kein der aktuellen Programmodulfunktionsklasse zugeordnetes ablaufbereites Programmodul vorhanden ist bzw. die der aktuellen Programmodulfunktionsklasse zugehörige klassenindividuelle Prozeßliste keine Vermerke enthält, kann sofort, d. h. noch vor Ablauf der für die Bearbeitung der betreffenden Programmodulfunktionsklasse vorgesehenen Zeitdauer, ein Wechsel der aktuellen Programmodulfunktionsklasse erfolgen. Damit wird eine gewisse Flexibilität in der Verteilung der Verarbeitungsleistung des Rechnerkerns auf die vorhandenen Programmodulfunktionsklassen erreicht, mit der eine Vergeudung von Rechenkapazität vermieden wird.

Zur echtzeitgebundenen Bearbeitung von Informationen ist in herkömmlichen Multitasking-Betriebssystemen ein Timer-Programmodule vorgesehen, das in der Regel die höchste Prioritätsstufe aufweist und aufgrund einer echtzeitbezogenen Information, z.B. eines periodischen Zeittaktes, sofort ablaufbereit wird. Das Timer-Programmodul überwacht gewissermaßen den Ablauf der Zeit und kann damit die Bearbeitung anderer Programmodule zeitlich synchronisieren, in dem es z. B. solche Programmodule erst dann als ablaufbereit erklärt, wenn eine gewisse Anzahl von Zeittakten eingetroffen sind.

Nach einer vorteilhaften Weiterbildung der Erfindung wird dieses Timer-Programmodul keiner Programmodulfunktionsklasse zugeordnet, um unabhängig von der Programmodulfunktionsklassenzuordnung eine sofortige Bearbeitung des Timer-Programmoduls bei Eintreffen der echtzeitbezogenen Informationen zu ermöglichen. Dazu wird vom Rechnerkern-Zuteilungssubsystem unmittelbar nach jedem Wechsel der aktuellen Programmodulfunktionsklasse die Ablaufbereitschaft des Timer-Programmoduls abgefragt und für den Fall, daß es ablaufbereit ist, also eine echtzeitbezogene Information eintraf, sofort die Bearbeitung des Timer-Programmoduls veranlaßt.

Eine weitere vorteilhafte Weiterbildung der Erfindung betrifft das in herkömmlichen Multitasking-Betriebssystemen stets ablaufbereite und mit der niedrigsten Prioritätsstufe versehene Leerlauf-Programmodul. Es kann vorteilhaft sein, eine Zuordnung dieses Leerlauf-Programmoduls zu einer Programmodulfunktionsklasse zu vermeiden, wenn eine Bearbeitung des Leerlauf-Programmoduls nur dann erfolgen soll, wenn sich im gesamten Betriebssystem kein ablaufbereites Programmodul finden läßt.

Die Verteilung der Verarbeitungsleistung des Rechnerkerns auf die verschiedenen Programmodulfunktionsklassen wird durch die Wiederholrate und die Zeitdauer bestimmt, d. h. wie häufig bzw. wie lange einer jeweiligen Programmodulfunktionsklasse der Rechnerkern zugänglich ist. Die Zeitdauer kann ohne zu erwartende Einschränkungen für alle Programmodulfunktionsklassen einheitlich gewählt sein und durch eine sich periodisch wiederholende Zeitinformation, z. B. einen Zeittakt mit 20 ms Periodendauer, vorgegeben werden.

Die Wiederholrate wird durch eine Abfolgetabelle festgelegt, in der die Programmodulfunktionsklassen im Sinne einer sich zyklisch wiederholenden Reihenfolge angegeben sind. Die Verteilung der Rechenkapazität läßt sich damit äußerst flexibel und einfach gestalten.

Vorteilhafte Verwendungen einer erfindungsgemäß ausgebildeten Kommunikationsanlage sind in den Ansprüchen 8 und 9 angegeben.

Besonders vorteilhaft erweist sich die Verwendung einer erfindungsgemäß ausgebildeten Kommunikationsanlage in einem in Form eines Server-Konzeptes modular strukturierten ISDN-Kommunikationssystem. Wie bereits erwähnt, sind die als Server bezeichneten "intelligenten Einheiten" bei der bekannten Kommunikationsanlage für sich eigenständige Rechenanlagen, die zur Bearbeitung bestimmter Dienste oder Aufgaben innerhalb des ISDN-Kommunikationssystems spezialisiert sind. In einer erfindungsgemäß ausgebildeten Kommunikationsanlage können die programmtechnischen Komponenten der Server auf einer gemeinsamen Rechenanlage mit einem einzigen Rechnerkern zusammengefaßt werden. Dazu ist in der Regel ein leistungsfähigerer Prozessor als gemeinsamer Rechnerkern nötig, mit dem wenigstens annähernd eine Verarbeitungsleistung erzielbar ist, die der Summe der Verarbeitungsleistung der in den einzelnen Servern vorhandenen Prozessoren entspricht. Die in ihrer Prioritätseinstufung unverändert belassenen Programmodule eines jeden Servers werden jeweils einer eigenen Programmodulfunktionsklasse zugeordnet. Durch Bemessung der Wiederholrate und der Zeitdauer erhalten die einer jeweiligen Programmodulfunktionsklasse zugeordneten Programmodule eines Servers einen der Verarbeitungsleistung des im bisherigen Servers vorhandenen Prozessors entsprechenden Anteil an der Verarbeitungsleistung des leistungsfähigeren gemeinsamen Prozessors.

Als besonders vorteilhaft erweist sich die Verwendung einer erfindungsgemäß ausgebildeten Kommunikationsanlage, wenn das der Kommunikationsanlage zugrundeliegende Betriebssystem, das im Regelfall für Teilhaberbetrieb ausgelegt ist, durch ein Teilnehmerbetriebssystem, z. B. UNIX, ergänzt werden soll, um den Benutzern der Kommunikationsanlage zusätzlich zu den bestehenden Diensten der Kommunikationsanlage auch die Möglichkeit zur individuellen Erstellung und Bearbeitung von persönlichen als auch vermittlungstechnischen Daten und Programmen zu bieten.

Aus der europäischen Patentanmeldung E-A 0 333 123 ist ein modular strukturiertes ISDN-Kommunikationssystem bekannt, bei dem ein Übergangs-Programmodul im betreffenden Teilhaberbetriebssystem der Kommunikationsanlage als Schleuse ausgebildet ist, in der vom bestehenden Teilhaberbetriebssystem zum hinzugefügten Teilnehmerbetriebssystem gewechselt wird. Dem Übergangs-Programmodul ist die niedrigste Prioritätsstufe zugeordnet, so daß es bisher von der Auslastung der Kommunikationsanlage abhängig war, wie oft und wie lange das Teilnehmerbetriebssystem den Benutzern zur Verfügung steht. Gesicherte Aussagen über Verarbeitungszeiten im Teilnehmerbetrieb konnten deshalb nicht gemacht werden.

Mit einer erfindungsgemäß ausgebildeten Kommunikationsanlage kann die bestehende Software für den Betriebssystemwechsel unverändert übernommen werden, wobei lediglich das Übergangs-Programmodul für sich alleine einer eigenen Programmodulfunktionsklasse zugeordnet wird. Durch die Reihenfolge und die Zeitdauer bei der Zuordnung der Programmodulfunktionsklassen kann dem Teilnehmerbetriebssystem ein beliebiger Anteil an der Verarbeitungsleistung des Rechnerkerns zugeteilt werden, wodurch eine gewisse Verarbeitungsleistung im Teilnehmerbetriebssystem garantiert werden kann.

Bezüglich weiterer Eigenschaften und der Bedeutung der Merkmale der Erfindung wird ausdrücklich auf die nachfolgende Erläuterung eines Ausführungsbeispiels der Erfindung verwiesen.

Anhand der Zeichnung soll die Erläuterung des Ausführungsbeispiels unterstützt werden. Dabei zeigen
- FIG 1: eine schematische Blockdarstellung eines bekannten ISDN-Kommunikations-Computers im Zusammenhang mit Peripheriegeräten,
- FIG 2: ein schematisches Blockschaltbild mit den wesentlichen Hardware-Komponenten für eine erfindungsgemäß ausgebildete Kommunikationsanlage,
- FIG 3: eine schematische Blockdarstellung zur Veranschaulichung der Zuweisung von Programmodulen über eine Prozeßliste,
- FIG 4: eine vereinfachende graphische Darstellung zur Veranschaulichung der Zustandsübergänge in einem Multitasking-Betriebssystem,
- FIG 5: eine schematische Blockdarstellung zur Verdeutlichung der Funktionen des Rechnerkern-Zuteilungssubsystems,
- FIG 6: eine veranschaulichende Darstellung einer Abfolgetabelle, und
- FIG 7: ein Ablaufdiagramm zur Veranschaulichung der wesentlichen programmtechnischen Schritte im Betriebssystem.

Zum Verständnis des Ausführungsbeispiels wird zunächst von einem bekannten, bereits erwähnten Kommunikationssystem ausgegangen; die Literaturstelle ist in der Beschreibungseinleitung genannt.

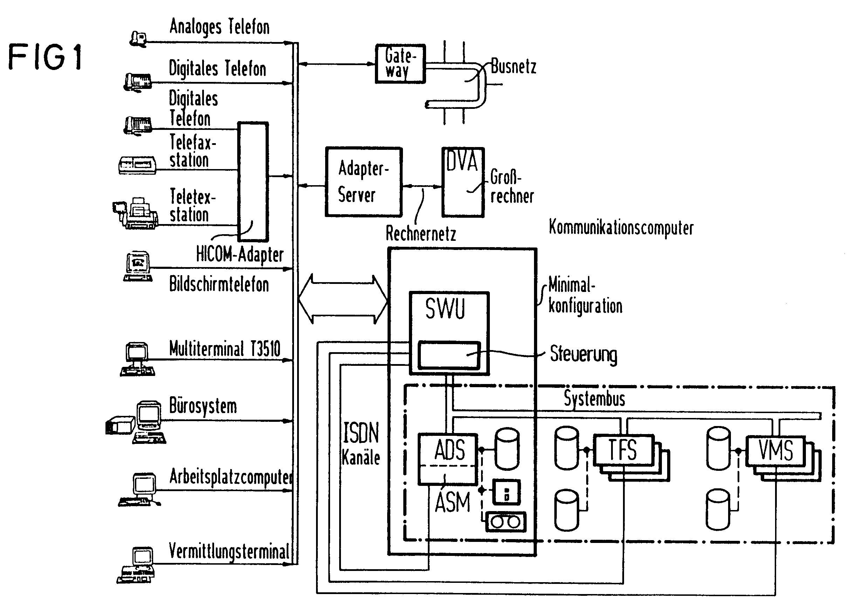

In der FIG 1 ist ein bekannter Kommunikationscomputer zusammen mit einer Vielzahl von anschließbaren Kommunikationsgeräten schematisch dargestellt. Wesentliche Bestandteile des Kommunikationscomputers sind eine Durchschalteeinheit SWU und eine Betriebs-Daten-Servereinheit ADS. Diese beiden Einheiten sind ergänzt durch eine Text-Fax-Servereinheit TFS und eine Sprachinformations-Servereinheit VMS. Zusätzlich kann die Betriebs-Daten-Servereinheit ADS ein Applikationsmodul ASM aufweisen, das mit einem Teilnehmerbetriebssystem versehen ist.

Die Einheiten SWU, ADS, TFS, VMS sind als eigenständige Verarbeitungseinheiten ausgebildet und mit eigenen Prozessoren versehen.

Die Durchschalteeinheit SWU und die Betriebs-Daten-Servereinheit ADS bilden zusammen eine Art Minimalkonfiguration des Kommunikationscomputers, die dem Ausführungsbeispiel im weiteren zugrundeliegen soll.

Gegenüber der Durchschalteeinheit SWU, die im wesentlichen lediglich Informationswege verknüpft, stellt die Betriebs-Daten-Servereinheit ADS eine zusätzlich mit der Organisation und Steuerung des gesamten Kommunikationssystems betraute Systemeinheit dar.

Die dazu in der Betriebs-Daten-Servereinheit ADS implementierten Funktionen lassen sich in einen systembetriebstechnischen Funktionskomplex und in verschiedene optionale Datenanwendungsfunktionen unterteilen. Zu den systembetriebstechnischen Funktionen zählen z. B. das Inbetriebsetzen der Anlage, das Laden von Systemprogrammen, das Verteilen und Starten dieser Systemprogramme, das Aktivieren bzw. Deaktivieren von Systemfunktionen sowie das Erfassen aller betrieblichen Veränderungen.

Für die Ausführung dieser Funktionen werden mehrere Programmodule bereitgehalten, die bei Bedarf dem Rechnerkern (Prozessor) in der Betriebs-Daten-Servereinheit ADS bzw. in der Durchschalteeinheit SWU zur Abarbeitung zugeführt werden.

Da in der Regel mehrere Funktionen gleichzeitig zur Ausführung anstehen können, sorgt sowohl in der Durchschalteeinheit SWU als auch in der Betriebs-Daten-Servereinheit ADS jeweils ein den Programmodulen übergeordnetes Programm, nämlich ein sogenanntes Betriebssystem, für eine Verwaltung des zugehörigen Rechnerkerns. Die Betriebssysteme sind über einen Systembus miteinander gekoppelt.

Da im allgemeinen kurze Reaktionszeiten erforderlich sind, müssen beide Betriebssysteme als Echtzeit-Betriebssysteme ausgebildet sein. Die installierten Betriebssysteme werden Multitasking-Betriebssysteme genannt, da die Programmodule bei ihrer Abarbeitung im Sinne ihrer aufgabenspezifischen Zuordnung als Tasken bezeichnet werden.

Die Programmodule sind aus Programmcode und Daten bestehende Softwareeinheiten, die bei ihrer Abarbeitung spezifische Funktionen erfüllen sollen, um damit einen strukturierten Aufbau eines Systems zu ermöglichen. Jedem Programmodul ist ein sogenannter Prioritätswert zugeordnet, der die Wichtigkeit der durch das Programmodul ausgeführten Funktion zum Ausdruck bringt und im Wettbewerb gegenüber anderen Tasken für die Zuteilung des Rechnerkerns entscheidend ist.

In einem für Echtzeitbearbeitung vorgesehenen Betriebssystem sind die Programmodule für zeitkritische Funktionen mit entsprechend hohen Prioritätswerten versehen, um bei Bedarf eine möglichst sofortige Zuteilung des Rechnerkerns zu erlangen.

Auf der Grundlage dieses bekannten Kommunikationscomputers und dessen Funktionseinheiten soll im folgenden eine mit der Erfindung versehene Kommunikationsanlage im Detail näher erläutert werden.

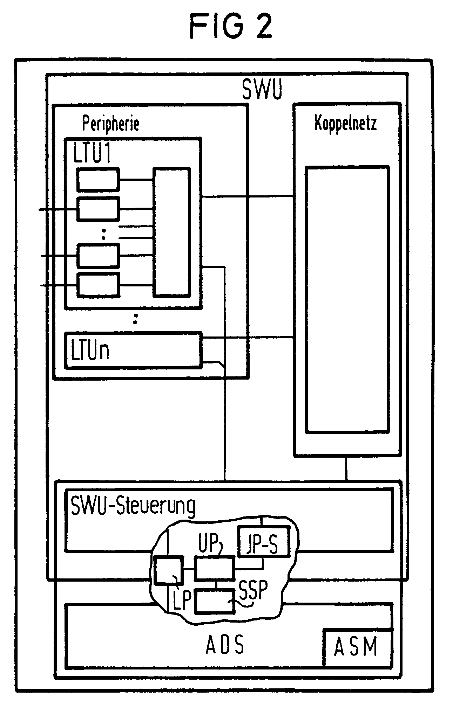

Dazu sind in der FIG 2 anhand eines Blockschaltbildes die Funktionskomponenten der Durchschalteeinheit SWU und der Betriebs-Daten-Servereinheit ADS bei einer die Erfindung beinhaltenden Kommunikationsanlage dargestellt. Wie ersichtlich ist, setzt sich die Durchschalteeinheit SWU aus drei Untereinheiten zusammen, nämlich einer Peripherieeinheit mit mehreren Anschlußeinheiten LTU...LTUn, einem Koppelnetz und einer SWU-Steuerung. Als einzelne Hardware-Komponenten der SWU-Steuerung sind ein Mikroprozessor »P, ein Systemspeicher SSP, ein Interface-Prozessor IPS sowie eine Leitungsperipherie LP vorhanden.

Diese Hardware-Komponenten stehen auch der Betriebs-Daten-Servereinheit ADS zur Verfügung, so daß die SWU-Steuerung und die Betriebs-Daten-Servereinheit zwar unterschiedliche Funktionseinheiten darstellen, ihnen aber nur eine gemeinsame Hardware zur Verfügung steht. Demzufolge ist auch nur ein Betriebssystem vorhanden, das die Programmodule sowohl der Betriebs-Daten-Servereinheit ADS als auch die der SWU-Steuerung koordiniert und dem gemeinsamen Mikroprozessor »P (Rechnerkern) zur Abarbeitung zuteilt.

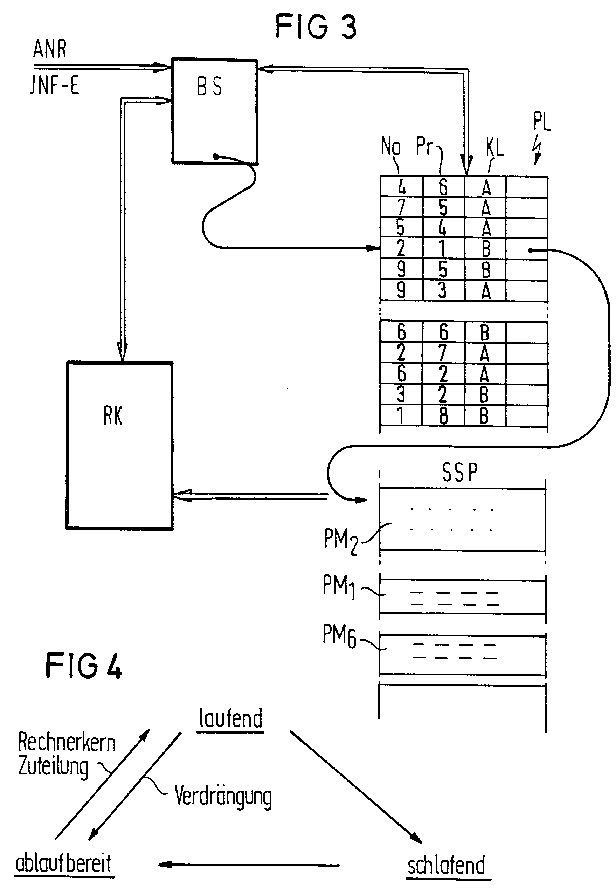

Die FIG 3 zeigt anhand schematischer Funktionsblöcke das Zusammenwirken der Prozeßliste PL und der Programmodule PM in einem Multitasking-Betriebssystem BS mit einem Rechnerkern RK.

Vom Prinzip her gesehen dient der Rechnerkern RK ausschließlich zur Bearbeitung des als Betriebssystem BS bezeichneten Programmes. Dieses Programm ist jedoch so ausgelegt, daß es in Abhängigkeit von eintreffenden Informationen INF-E, z. B. Interrupts, als auch interner Zustände nacheinander jeweils einen der ihm zur Verfügung stehenden Programmodule PM auswählt und für eine gewisse Zeitdauer dem Rechnerkern RK zur Ausführung zuteilt. Jedes Programmodul PM ist als Programmcodesequenz im Systemspeicher SSP hinterlegt und hat einen Namen NO, z. B. eine Identifikationsnummer sowie einen Prioritätswert PR. Außerdem weist gemäß der Erfindung jedes Programmodul PM eine Programmodulfunktionsklassenzuordnung auf, auf deren Bedeutung zunächst noch nicht weiter eingegangen wird.

Dem Betriebssystem BS steht eine Prozeßliste PL zur Verfügung, in der es die ablaufbereiten Programmodule z. B. durch Eintragung des Namens NO, des Prioritätswertes PR, der Klassenzuordnung KL und der Adresse ADR des Programmodules im Systemspeicher SSP vermerkt, und aus der dann das jeweils höchstpriorisierte Programmodul PM für eine Zuweisung an den Rechnerkern RK ermittelt wird.

Wird einem Programmodul der Rechnerkern RK zugeteilt, kann das betreffende Programmodul den Rechnerkern RK solange behalten, bis sich entweder ein höher priorisierteres Programmodul um Zuteilung des Rechnerkerns RK bewirbt oder bis es von sich aus den Rechnerkern RK abgibt. Letzteres trifft vor allem auch dann zu, wenn ein Programmodul zur Bearbeitung seiner Aufgaben gewisse, von anderen Programmodulen zu erbringende Informationen benötigt und auf das Eintreffen dieser Informationen warten muß.

Wie der in FIG 4 dargestellte Zustandsgraph zeigt, befindet sich jedes Programmodul des Betriebssystem zu einem beliebigen Zeitpunkt in genau einem von im wesentlichen drei Zuständen, die als laufend, ablaufbereit und schlafend bezeichnet werden. Laufend ist demnach dasjenige Programmodul, dem im Moment der Rechnerkern zugeteilt ist. Ablaufbereit sind alle Programmodule, die sich um Zuteilung des Rechnerkernes bewerben und schlafend sind die Programmodule, die auf das Eintreffen bestimmter Ereignisse oder Meldungen warten.

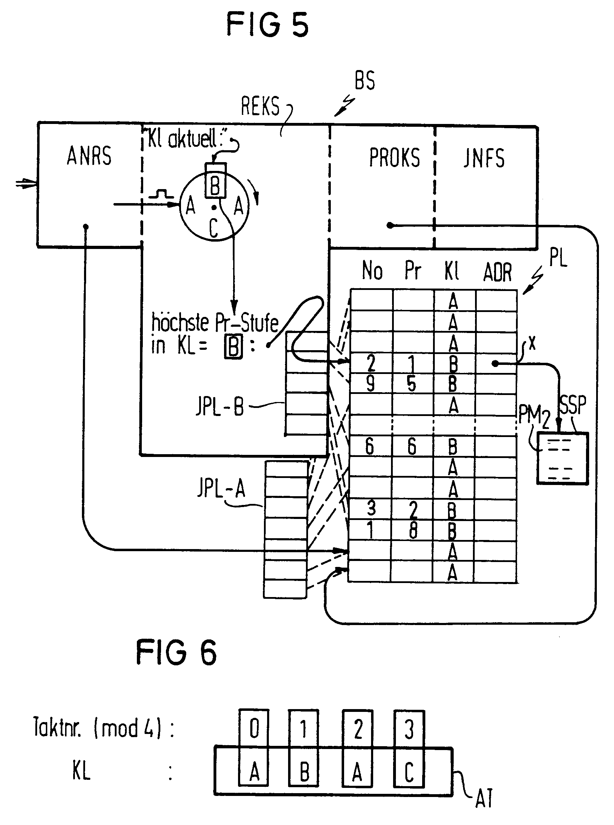

Derjenige Programmteil, der im Betriebssystem für die Auswahl und Zuteilung eines Programmoduls für den Rechnerkern zuständig ist, wird als sogenanntes Rechnerkern-Zuteilungssubsystem REKS oder auch Task-Scheduler bezeichnet. Als weitere wesentliche Programmteile des Betriebssystems sind - wie in FIG 5 anhand eines Blockbildes dargestellt - ein Anreiz-Ermittlungssubsystem ANRS sowie ein Prozeßkommunikationssubsystem PROKS und ein Informationstransportsubsystem INFS.

Die Auswahl des nächsten, dem Rechnerkern zuzuteilenden Programmodules erfolgt mit Hilfe der bereits erwähnten Prozeßliste PL, in der das Anreiz-Ermittlungssubssystem ANRS ablaufbereite Programmodule durch Eintragung wenigstens ihrer Identifikationsnummer NO vermerkt. In der Regel geschieht dies bei Eintreffen einer Information, z. B. eines Interrupts bzw. eines Anreizes ANR, der die Bearbeitung eines betreffenden Programmodules veranlaßt.

Das Prozeßkommunikationssubsystem PROKS dient dazu, um aus dem momentan laufenden Programmodul Aufträge an andere Programmodule geben zu können, die in solchen Fällen vom Prozeßkommunikationssubsystem PROKS in der Prozeßliste PL als ablaufbereit vermerkt werden.

Mit Hilfe des Informationstransportssubsystems INFS können Daten zwischen den Programmodulen ausgetauscht werden, z. B. dann, wenn ein laufendes Programmodul ein anderes Programmodul beauftragt und dieses mit Eingabedaten versorgen möchte bzw. anschließend von diesem Ausgabedaten erwartet.

Wie in Zusammenhang mit FIG 3 bereits angedeutet wurde, sind die Programmodule jeweils einer Programmodulfunktionsklasse KL zugeordnet, wobei sich die Programmodule einer jeden Programmodulfunktionsklasse KL jeweils auf einen gemeinsamen Funktions- bzw. Aufgabenkomplex der Kommunikationsanlage beziehen.

Als Beispiele solcher Funktions- bzw. Aufgabenkomplexe können z. B. die Vermittlungstechnik, die Gesprächsdatenerfassung, der Daten- und Meldungstransport oder die organisatorischen Aufgaben des Kommunikationssystems genannt werden.

Im vorliegenden Ausführungsbeispiel sollen jedoch als Funktionskomplexe zum einen die SWU-Steuerung, zum anderen die Betriebs-Daten-Servereinheit ADS und des weiteren die Funktionen des durch ein Übergangsprogrammodul einschleusbaren Teilnehmerbetriebssystems aufgefaßt werden. Das Übergangsprogrammodul entspricht im vorliegenden Ausführungsbeispiel dem Leerlauf-Programmodul in herkömmlichen Multitasking-Betriebssystemen.

Mit der vorgenommenen Zuordnung sind die Programmodule der SWU-Steuerung einer ersten Programmodulfunktionsklasse A, die der Betriebs-Daten-Servereinheit ADS einer zweiten Programmodulfunktionsklasse B und das Übergangsprogrammodul einer dritten Programmodulfunktionsklasse C zugeordnet.

Zur Implementierung der Funktionen der SWU-Steuerung und der Betriebs-Daten-Servereinheit ADS können die Programmodule verwendet werden, die bei der bekannten ISDN-Kommunikationsanlage (Literaturstelle ist in der Beschreibungseinleitung angegeben) auf zwei getrennten Prozessoren und Betriebssystemen ablaufen. Die den Programmodulen jeweils zugeordneten und zur Erfüllung der Echtzeitanforderungen jeweils fein aufeinander abgestimmten Prioritätswerte können unverändert bleiben.

Das Rechnerkern-Zuteilungssubsystem REKS verwendet die Zuordnung der Programmodule in Programmodulfunktionsklassen KL dazu, um bei der Auswahl von ablaufbereiten Programmodulen aus der Prozeßliste PL jeweils nur solche Programmodule in Betracht zu ziehen, die zu einem jeweiligen Zeitpunkt einer aktuellen Programmodulfunktionsklasse KL angehören. In der FIG sind die in der Prozeßliste PL vermerkten Programmodule, die nicht der aktuellen Programmodulfunktionsklasse angehören, unsichtbar gehalten. Als Alternative zu einer einzigen Prozeßliste, in der die Programmodule PM aller Programmodulfunktionsklassen vermerkt werden, können auch - wie angedeutet - klassenindividuelle Prozeßlisten JPL-A, JPL-B vorgesehen sein.

Welche der drei Programmodulfunktionsklassen KL zu einem jeweiligen Zeitpunkt die aktuelle ist, ändert sich mit einem periodischen Zeittakt (Timer-Interrupt) alle 20 ms.

Mit Hilfe einer Abfolgetabelle AT, in der die Reihenfolge vermerkt ist, welche der Programmodulfunktionsklassen KL jeweils als nächstes aktuell werden soll, ermittelt das Rechnerkern-Zuteilungssubsystem REKS bei Eintreffen des periodischen Zeittaktes die nächste aktuelle Programmodulfunktionsklasse KL.

Unterschiede zu herkömmlichen Multitasking-Betriebssystemen betreffen somit im wesentlichen nur das Rechnerkern-Zuteilungssubsystem REKS. Da das Leerlauf-Programmodul ständig ablaufbereit ist, sind diesbezüglich keine Vermerke in der Prozeßliste erforderlich. Sobald die dritte Programmodulfunktionsklasse C aktuell ist, wird das Leerlauf-Programmodul laufend und damit das Teilnehmerbetriebssystem aktiv.

In der FIG 6 ist ein Beispiel für eine Abfolgetabelle AT dargestellt. Die erste Programmodulfunktionsklasse A wird bei dieser Abfolgetabelle AT bei jedem zweiten und die zweite und dritte Programmodulfunktionsklasse B und C jeweils bei jedem vierten periodischen Zeittakt aktuell. Von der Verarbeitungsleistung des Rechnerkerns sind demnach 50 % der SWU-Steuerung und jeweils 25 % der Betriebs-Daten-Servereinheit ADS und dem Teilnehmerbetriebssystem zugeteilt.

Zwischen zwei periodischen Zeittakten beachtet das Rechnerkern-Zuteilungssubsystem REKS nur die der jeweils aktuellen Programmodulfunktionsklasse KL zugehörigen und als ablaufbereit vermerkten Programmodule. Somit sind die Prioritätswerte der Programmodule nur innerhalb derselben Programmodulfunktionsklasse KL von Bedeutung. Schickt z. B. ein Programmodul einem höherpriorisierten Programmodul eine Meldung zu und wird dieses dadurch ablaufbereit, so erhält das höherpriorisierte Programmodule nur dann sofort den Rechnerkern, wenn beide Programmodule in derselben Programmodulfunktionsklasse KL eingeordnet sind.

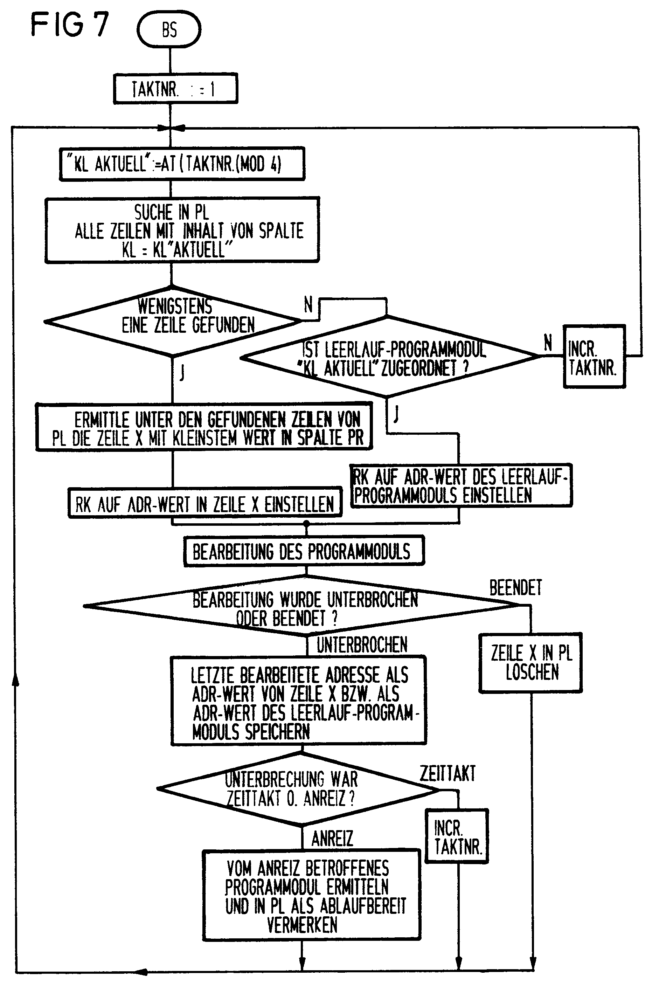

In der FIG 7 ist ein Ablaufdiagramm dargestellt, anhand dessen sich die wesentlichen programmtechnischen Schritte, insbesondere die der Rechnerkern-Zuteilungssequenz im Betriebssystem nachvollziehen lassen.

Ausgehend von einer Voreinstellung einer für die Zählung der Zeittakte vorgesehenen Variablen Taktnr. wird die aktuelle Programmodulfunktionsklasse aus der Abfolgetabelle AT an der Position (Taktnr. modulo 4) ermittelt. Im Zusammenhang mit dem Beispiel aus FIG 5 und FIG 6 wäre damit zunächst die Programmodulfunktionsklasse "B" als aktuelle Programmodulfunktionsklasse ausgewählt.

Nachdem die aktuelle Programmodulfunktionsklasse feststeht, werden aus der Prozeßliste PL diejenigen Programmodule - die zugehörigen Vermerke sind in der Prozeßliste zeilenweise untereinander hinterlegt - ermittelt, die der aktuellen Programmodulfunktionsklasse angehören.

Wurde wenigstens ein Programmodul gefunden, so wird unter den gefundenen Programmodulen dasjenige ausgewählt, das den kleinsten PR-Wert, d. h. die höchste Prioritätsstufe, aufweist.

Wurde jedoch kein Programmodul gefunden, das der aktuellen Programmodulfunktionsklasse zugeordnet ist, so erfolgt eine Abfrage, ob das Leerlauf-Programmodul der aktuellen Programmodulfunktionsklasse zugeordnet ist.

Ist dies nicht der Fall, so wird die Variable Taktnr. um eins hochgezählt, d. h. inkrementiert, und eine neue aktuelle Programmodulfunktionsklasse ermittelt.

In den Fällen, in denen ein der aktuellen Programmodulfunktionsklasse zugeordnetes Programmodul ermittelt wurde, wird der Rechnerkern RK, d. h. der Prozessor, auf die Adresse des betreffenden Programmoduls im Systemspeicher SSP eingestellt. Die Adresse kann z. B. in der Spalte ADR der Prozeßliste PL hinterlegt sein. Danach erfolgt die Bearbeitung des ermittelten Programmodules. In FIG 5 wäre dies z. B. das Programmodul mit der Identifikationsnummer NO "2".

Die Bearbeitung dieses Programmoduls kann beendet sein oder unterbrochen werden. Ist die Bearbeitung beendet, wird in der Prozeßliste PL der diesem Programmodul zugehörige Vermerk, d. h. im vorliegenden Beispiel die Zeile X, gelöscht und die Zuteilungssequenz von neuem durchlaufen.

Ist die Bearbeitung unterbrochen worden, so wird die letzte bearbeitete Adresse des Programmoduls als Adreßwert ADR gespeichert, um für eine Fortsetzung des Programmodules die jeweilige relevante Adresse zur Verfügung zu haben.

Die Unterbrechung kann in Form eines periodischen Zeittaktes erfolgt sein, der für die Verteilung der Rechenleistung vorgesehen ist oder sie kann durch eine andere eintreffende Information in Form eines Anreizes bzw. Interrupts ausgelöst worden sein.

Ist die Unterbrechung durch den periodischen Zeittakt hervorgerufen worden, so wird die Variable Taktnr. inkrementiert. Wurde die Unterbrechung aufgrund eines Anreizes veranlaßt, so wird im Anreizermittlungssubsystem ANRS das vom Anreiz betroffene Programmodul ermittelt und in der Prozeßliste PL als ablaufbereit vermerkt. Danach wird die Zuteilungssequenz von neuem durchlaufen.

## Patentansprüche

1. Programmgesteuerte Kommunikationsanlage bzw. Vermittlungseinrichtung
- mit wenigstens einer Durchschalteeinheit (SWU)
-- an die über Peripheriemodule Geräte und Netze anschließbar sind, und
-- die ein Koppelnetz aufweist,
- und mit einem programmierbaren digitalen Rechensystem,
-- das eintreffende Informationen nach jeweiligen, in Form von in Programmmodulen hinterlegten Verarbeitungsvorschriften verarbeitet und resultierende Ausgangsinformationen abgibt,
-- das einen Systemspeicher zur Speicherung
--- von Daten und
--- der Programmodule aufweist
-- und das wenigstens einen Rechnerkern aufweist, dem die Programmodule unter Steuerung eines Multitasking-Betriebssystems zugewiesen werden,
--- das ein Anreiz-Ermittlungssubsystem aufweist,
---- welches die für eine Bearbeitung eintreffender Informationen vorgesehenen Programmodule in einer Prozeßliste als ablaufbereit vermerkt,
--- das ein Prozeßkommunikationssubsystem aufweist,
---- welches von dem jeweils laufenden Programmodul beauftragte Programmodule als ablaufbereit vermerkt,
--- und das ein Rechnerkern-Zuteilungssubsystem aufweist,
---- welches in Abhängigkeit von den Programmodulen individuell zugeordneten Prioritätswerten aus der Prozeßliste jeweils ein Programmodul auswählt und dem Rechnerkern zur Ausführung zuweist,
**dadurch gekennzeichnet**,
- daß die Programmodule (PM) funktionskomplexorientiert jeweils einer Programmodulfunktionsklasse (KL) zugeordnet sind, und
- daß das Rechnerkern-Zuteilungssubsystem (REKS) im Sinne einer vorgebbaren funktionskomplexbezogenen Verteilung der Verarbeitungsleistung des Rechnerkerns (RK) in vorgebbarer Abfolge und für eine vorgebbare Zeitdauer nacheinander jeweils eine der Programmodulfunktionsklassen (KL) als aktuelle Programmodulfunktionsklasse (KL aktuell) erkennt und bei der Auswahl von ablaufbereiten Programmodulen nur solche Programmodule (PM) berücksichtigt, die eine Zuordnung zur jeweils aktuellen Programmodulfunktionsklasse aufweisen.

2. Programmgesteuerte Kommunikationsanlage bzw. Vermittlungseinrichtung nach Anspruch 1,
**dadurch gekennzeichnet**,
- daß jeder Programmodulfunktionsklasse eine klassenindividuelle Prozeßliste (JPL-A, JPL-B) zum Vermerk der ablaufbereiten Programmodule innerhalb der betreffenden Programmodulfunktionsklasse zugeordnet ist, und
- daß das Rechnerkern-Zuteilungssubsystem (REKS) jeweils die der aktuellen Programmodulfunktionsklasse zugeordnete klassenindividuelle Prozeßliste (JPL-B) als Prozeßliste erkennt.

3. Programmgesteuerte Kommunikationsanlage nach Anspruch 1 oder 2,
**dadurch gekennzeichnet**,
daß im Falle einer bezüglich der aktuellen Programmodulfunktionsklassen vermerkfreien Prozeßliste bzw. individuellen Prozeßliste sofort eine andere Programmodulfunktionsklasse als aktuelle Programmodulfunktionsklasse erkannt wird.

4. Programmgesteuerte Kommunikationsanlage bzw. Vermittlungseinrichtung nach einem der vorhergehenden Ansprüche,
**dadurch gekennzeichnet**,
daß zur Bearbeitung von eintreffenden echtzeitbezogenen Informationen ein Timer-Programmodul vorgesehen ist, das frei von einer Programmodulfunktionsklassenzuordnung ist und das im Falle seiner Ablaufbereitschaft vom Rechnerkern-Zuteilungssubsystem bei jedem Wechsel der aktuellen Programmodulfunktionsklasse dem Rechnerkern zur Ausführung zugewiesen wird.

5. Programmgesteuerte Kommunikationsanlage bzw. Vermittlungseinrichtung nach einem der vorhergehenden Ansprüche,
**dadurch gekennzeichnet**,
daß ein ständig ablaufbereites Leerlauf-Programmodul vorgesehen ist, das frei von einer Programmodulfunktionsklassenzuordnung ist und vom Rechnerkern-Zuteilungssubsystem bei einer bezüglich sämtlicher Programmodulfunktionsklassen vermerkfreien Prozeßliste bzw. bei einer Vermerkfreiheit sämtlicher klassenindividueller Prozeßlisten dem Rechnerkern zur Ausführung zugewiesen wird.

6. Programmgesteuerte Kommunikationsanlage bzw. Vermittlungseinrichtung nach einem der vorhergehenden Ansprüche,
**dadurch gekennzeichnet**,
daß ein Wechsel der aktuellen Programmodulfunktionsklasse jeweils bei Eintreffen einer sich periodisch wiederholenden echtzeitbezogenen Information erfolgt.

7. Programmgesteuerte Kommunikationsanlage bzw. Vermittlungseinrichtung nach einem der vorhergehenden Ansprüche,
**dadurch gekennzeichnet**,
daß zur Festlegung der funktionskomplexbezogenen Verteilung der Verarbeitungsleistung des Rechnerkerns eine Abfolgetabelle (AT) vorgesehen ist, in der die Programmodulfunktionsklassen in der Reihenfolge ihres Aktuellwerdens vermerkt sind.

8. Verwendung einer programmgesteuerten Kommunikationsanlage nach einem der Ansprüche 1 bis 7 in einem modular strukturierten ISDN-Kommunikationssystem mit Servereinheiten, deren Programmodule im Sinne des Bildens eines Funktionskomplexes der Kommunikationsanlage einer jeweiligen serverrepräsentierenden Programmodulfunktionsklasse zugeordnet sind.

9. Verwendung einer programmgesteuerten Kommunikationsanlage nach einem der Ansprüche 1, 2, 3, 4, 6 und 7 in einem ISDN-Kommunikationssystem, bei dem ein Teilnehmerbetriebssystem über ein als Schleuse ausgebildetes Übergangsprogrammodul verfügbar ist, wobei das Übergangsprogrammodul im Sinne des Bildens eines Funktionskomplexes der Kommunikationsanlage einer übergangsprogrammodulindividuellen Programmodulfunktionsklasse zugeordnet ist.

## Claims

1. Program-controlled communications installation and/or switching device
- having at least one switching unit (SWU),
-- to which devices and networks can be connected via periphery modules and
-- which has a switching network,
- and having a programmable digital computer system,
-- which processes incoming information according to respective processing rules which are deposited in program modules and emits the resultant output information,
-- which has a system memory for storing
--- data and
--- the program modules
-- and which has at least one computer kernel to which the program modules are assigned under the control of a multi-tasking operating system,
--- which has an event detection subsystem,
---- which records that the program modules provided for the processing of incoming information are executable in a task list,
--- which has a process communication subsystem,
---- which records that program modules tasked by the program module running in each case are executable,
--- and which has a computer kernel allocation subsystem
---- which, depending on priority values individually allocated to the program modules, respectively selects a program module from the task list and assigns it to the computer kernel for execution,
characterized
- in that the program modules (PM), oriented in terms of function complex, are in each case allocated to a program module function class (KL) and
- in that in order to distribute, in a prescribable and function-complex-related manner, the processing capacity of the computer kernel (RK), the computer kernel allocation subsystem (REKS) successively recognizes one of the program module function classes (KL) in each case as the current program module function class (current KL) in a prescribable sequence and for a prescribable period and, when selecting executable program modules, only takes account of those program modules (PM) which are allocated to the current program module function class in each case.

2. Program-controlled communications installation and/or switching device according to Claim 1, characterized
- in that to each program module function class there is allocated a class-specific task list (JPL-A, JPL-B) for recording the executable program modules within the program module function class in question, and
- in that the computer kernel allocation subsystem (REKS) respectively recognizes as the task list the class-specific task list (JPL-B) which is allocated to the current program module function class.

3. Program-controlled communications installation according to Claim 1 or 2,
characterized in that a different program module function class is immediately recognized as the current program module function class in the case of a task list and/or specific task list in which the current program module function classes are not recorded.

4. Program-controlled communications installation and/or switching device according to one of the preceding claims, characterized in that a timer program module is provided for processing incoming real-time-related information, which timer program module is not allocated to any program module function class and is assigned for execution, when it is executable, to the computer kernel by the computer kernel allocation subsystem whenever the current program module function class is changed.

5. Program-controlled communications installation and/or switching device according to one of the preceding claims, characterized in that a constantly executable idling program module is provided which is not allocated to any program module function class and is assigned, for execution, to the computer kernel by the computer kernel allocation subsystem in the event of a task list not containing a record of any of the program module function classes and/or if none of the class-specific task lists contains a record.

6. Program-controlled communications installation and/or switching device according to one of the preceding claims, characterized in that the current program module function class is changed each time a periodically reoccurring real-time-related information item arrives.

7. Program-controlled communications installation and/or switching device according to one of the preceding claims, characterized in that in order to determine the function-complex-related distribution of the processing capacity of the computer kernel, a sequence table (AT) is provided in which the program module function classes are recorded in the sequence in which they become current.

8. Use of a program-controlled communications installation according to one of Claims 1 to 7 in an ISDN communications system which has a modular structure and server units, the program modules of which are allocated to a respective program module function class representing a server in order to form a function complex of the communications installation.

9. Use of a program-controlled communications installation according to one of Claims 1, 2, 3, 4, 6 and 7 in an ISDN communications system, in the case of which a time-sharing operating system is available via a transition program module designed as a sluice, the transition program module being allocated to a program module function class which is specific to the transition program module in order to form a function complex of the communications installation.

## Revendications

1. Installation de communication ou dispositif de commutation à commande programmée, comportant
- au moins une unité d'interconnexion (SWU),
-- à laquelle des appareils et des réseaux peuvent être raccordés par l'intermédiaire de modules périphériques, et
-- qui possède un réseau de couplage,
- et un système de calcul numérique programmable,
-- qui traite des informations entrantes conformément à des prescriptions respectives de traitement mémorisées sous la forme de modules de programme et délivre des informations de sortie résultantes,
-- qui comporte une mémoire de système pour la mémorisation
--- de données, et
--- des modules de programme, et
-- qui possède au moins un noyau d'ordinateur, auquel sont affectés les modules de programme sous la commande d'un système d'exploitation multi-tâches,
--- qui possède un système de bus de détermination de sollicitations,
---- qui signale les modules de programme prévus pour le traitement d'informations entrantes, comme étant prêt pour l'exécution, dans une liste de processus,
--- qui possède un sous-système de communication de processus,
---- qui signale des modules de programme chargés par le module de programme respectivement en cours, comme étant prêt pour l'exécution, et
--- qui possède un sous-système d'affectation du noyau d'ordinateur,
---- qui, en fonction de valeurs de priorité associées individuellement aux modules de programme, sélectionne respectivement un module de programme parmi la liste de processus et l'affecte en vue de son exécution au noyau d'ordinateur,
caractérisé par le fait
- que les modules de programme (PM) sont affectés, d'une manière axée sur des complexes de fonctions, respectivement à une classe (KL) de fonctions de modules de programme, et
- que le sous-système (REKS) d'affectation au noyau d'ordinateur identifie respectivement et successivement l'une des classes (KL) de fonctions de modules de programme en tant que classe actuelle de fonctions de modules de programme (KL actuelle), dans le sens d'une répartition devant être prédéterminée, rapportée au complexe de fonctions, de la puissance de traitement du noyau d'ordinateur (RK) selon une séquence pouvant être prédéterminée et pendant un intervalle de temps pouvant être prédéterminé, et, lors de la sélection de modules de programme prêts pour l'exécution, prend en compte uniquement de tels modules de programme (PM), qui présentent une association avec la classe respectivement actuelle de fonctions de modules de programme.

2. Installation de communication ou dispositif de commutation à commande programmée suivant la revendication 1, caractérisé par le fait
- qu'à chaque classe de fonctions de modules de programme est associée une liste de processus (JPL-A, JPL-B), qui est prévue individuellement pour chaque classe et qui sert à marquer les modules de programmes prêts pour l'exécution, à l'intérieur de la classe considérée de fonctions de modules de programme, et
- que le sous-système (REKS) d'affectation au noyau d'ordinateur identifie respectivement la liste de processus (JPL-B), qui est prévue pour chaque classe et est associée à la classe actuelle de fonctions de modules de programme, en tant que liste de processus.

3. Installation de communication à commande programmée suivant la revendication 1 ou 2, caractérisée par le fait
que dans le cas d'une liste de processus ou d'une liste individuelle de processus, ne comportant aucun marquage en rapport avec les classes actuelles de fonctions de modules de programme, une classe de modules de fonctions de programme autre que la classe actuelle de fonctions de modules de programme est immédiatement identifiée.

4. Installation de communication ou dispositif de commutation à commande programmée suivant l'une des revendications précédentes, caractérisé par le fait
que pour le traitement d'informations individuelles, rapportées en temps réel, il est prévu un module de programme de minutage, qui ne présente aucune association de classe de fonctions de modules de programme et qui, dans le cas de son état prêt pour l'exécution, est affecté pour l'exécution au noyau d'ordinateur par le sous-système d'affectation au noyau d'ordinateur, lors de chaque changement de la classe actuelle de fonctions de modules de programme.

5. Installation de communication ou dispositif de commutation à commande programmée suivant l'une des revendications précédentes, caractérisé par le fait
qu'il est prévu un module de programme de fonctionnement à vide, prêt en permanence pour l'exécution et qui ne présente aucune association de classe de fonctions de modules de programmes et est affecté pour l'exécution au noyau d'ordinateur par le sous-système d'affectation au noyau d'ordinateur, dans le cas d'une liste de processus exempte de marquage concernant toutes les classes de fonctions de modules de programme ou dans le cas d'une absence de marquage de toutes les listes de processus prévues individuellement pour les classes.

6. Installation de communication ou dispositif de commutation à commande programmée suivant l'une des revendications précédentes, caractérisé par le fait
qu'une commutation de la classe actuelle de fonctions de modules de programme s'effectue respectivement lors de l'arrivée d'une information présente en temps réel, qui se répète périodiquement.

7. Installation de communication ou dispositif de commutation à commande programmée suivant l'une des revendications précédentes, caractérisé par le fait
que pour la détermination de la répartition, rapportée à des complexes de fonctions, de la puissance de traitement du noyau d'ordinateur, il est prévu une table de séquences (AT), dans laquelle les classes de fonction de modules de programme sont marquées dans la succession de leur arrivée en temps que classe actuelle.

8. Utilisation d'une installation de commutation à commande programmée suivant l'une des revendications 1 à 7 dans un système de communication ISDN à structure modulaire comportant des unités formant serveurs, dont les modules de programme sont associés, dans le sens de la formation d'un complexe de fonctions de l'installation de communication, à une classe respective de fonctions de modules de programme, qui représente le serveur.

9. Utilisation d'une installation de communication à commande programmée suivant l'une des revendications 2, 3, 4, 5, 6 et 7 dans un système de communication ISDN, dans lequel un système de desserte des abonnés est disponible par l'intermédiaire d'un module de programme de transfert réalisé sous la forme d'un sas, le module de programme de transfert étant associé, dans le sens de la formation d'un complexe de fonctions de l'installation de communication, à une classe de fonctions de modules de programme, prévue individuellement pour chaque module de programme de transfert.
